# EUROPEAN PATENT APPLICATION

(11) **EP 1 352 826 A1**
(43) Date of publication of application: **15.10.2003**
(21) Application number: 02425217.3
(22) Date of filing: 09.04.2002
(51) Int. Cl.: B62M 3/00

(54) **Bicycle components having coupling portions, and coupling provided thereby**

(71) Applicant: Campagnolo Srl, 36100 Vicenza (VI) (IT)
(72) Inventor: Meggiolan, Mario, 36051 Creazzo (Vicenza) (IT)
(74) Representative: Notaro, Giancarlo

(57) **Abstract**

A bicycle component (2) with at least one male (4), or female (5), coupling zone, suitable to be coupled to a corresponding coupling zone, female (5) or male (4) respectively, of a second bicycle component (3). The two coupling zones, male (4) and female (5), present respective reciprocal engaging surfaces (4a, 5a) which have a section with a trilateral profile .

## Description

The present invention relates to bicycle components with male coupling zones, bicycle components with female coupling zones and the relative couplings in which the two coupling zones, male and female, present respective reciprocal engaging surfaces.

Couplings of this type are used to connect various bicycle components to one another, such as for example each of the two bicycle pedal cranks to the bottom bracket spindle, or the pedal crank to the pedal spindle associated with it.

In bicycles in general and specifically in racing bicycles there is an increasing need to produce components and couplings which are simultaneously simple, sturdy and light. Simplicity of the component is intended both in the sense of allowing coupling and decoupling of the connected parts with extremely easy and fast operations, and with reference to the simplicity and consequent low cost of the operations required to manufacture the component. Sturdiness is another fundamental characteristic which must be intended both with reference to absolute stability of the connection and to the possibility of guaranteeing the transmission even of high stresses in various stress conditions, such as tractive, bending and torsional stress. Finally, the structure of the coupling component must also be as light as possible, in order to contribute towards maximum efficiency of the bicycle.

In prior art various types of connection devices have been proposed. For example, the Applicant has for some time been manufacturing and marketing bicycle pedal cranks which are coupled to the bottom bracket spindle by means of a male element composed of a portion with square section formed at one end of the spindle and a cavity with corresponding profile formed in the pedal crank. The reciprocal engaging of the male element in the cavity guarantees both the assembly position of the pedal crank in relation to the spindle axis, and transmission of bending, shearing and torsional stress between spindle and pedal crank. The axial locking of the pedal crank on the spindle is then guaranteed by a lock screw that engages a threaded axial hole formed in the spindle from its end surface and which has a head that rests against a respective seat formed in the pedal crank.

In the field of spindle-pedal crank coupling devices, other coupling devices are also known, with a male element and a cavity with grooved surfaces, as illustrated for example in EP-A-0 756 991 and before this in FR-A-1 273 107. However, these solutions are not entirely satisfactory, especially as regards simplicity of the manufacturing operations and relative production costs.

Object of the present invention is to produce a coupling component of the type indicated at the beginning of the present description, which is able to satisfy in the best possible manner all the requirements mentioned above.

With a view to attaining this object, the invention relates to a bicycle component with at least one male coupling zone suitable to be coupled with a corresponding female coupling zone of a second bicycle component, the two coupling zones, male and female, presenting respective reciprocal engaging surfaces, characterized in that said male coupling zone presents a section with a trilateral profile.

According to a second aspect, mirroring the previous one, the invention also relates to a bicycle component with at least one female coupling zone suitable to be coupled with a corresponding male coupling zone of a second bicycle component, the two coupling zones, female and male, with respective reciprocal engaging surfaces, characterized in that said female coupling zone presents a section with a trilateral profile.

Thanks to this characteristic, the component according to the invention, according both to the aforesaid first and second aspects, is able to guarantee the necessary precision and sturdiness of connection, and to allow manufacturing operations relatively simple and at low cost. Simultaneously, the trilateral profile conformation is ideal also from the point of view of simplicity and lightness of the component. The trilateral profile may have one or more rectilinear, or partly curved, sides, according to any possible combination. The curved sides may be arched towards the centre of the profile or towards the outside of the profile. The profile may be substantially equilateral, or substantially isosceles, triangle-shaped, or irregular triangle-shaped with all three sides differing from one another.

According to a preferred embodiment, the trilateral profile has one or more rounded vertices and preferably all three rounded vertices in order to define a trilobate profile. The three sides of the trilobate profile may also be concaved towards the inside of the triangle, in order to define a figure with three radial petals, angularly spaced apart.

According to another preferred aspect of the invention, the aforesaid engaging surfaces of the male coupling zone and of the female coupling zone have first engaging portions with the aforesaid trilateral profile and second engaging portions, in a position axially moved in relation to the first portions, with a circular profile. In this way, the reciprocal engaging of the portions with triangular profile guarantees the sturdiness and stability of the coupling, especially with reference to the transmission of torsional stresses in relation to the common axis of the male and female coupling zones, while the portions with the circular section guarantee the precision of the relative positioning of the two elements, especially with reference to possible misalignments of the axes of the two male and female coupling zones.

Again according to the invention, the aforesaid engaging surfaces are dimensioned so that they are coupled with interference. In the aforesaid case in which the first coupling portions have a trilateral profile and the second coupling portions have a circular profile, both pairs of portions of coupling surfaces are assembled with interference.

It is also possible that the aforesaid reciprocally engaging surfaces of the coupling zones have an axially uniform section, or that those surfaces are axially tapered.

In this last case, each of the two coupling zones has for example a conic conformation with rectilinear generating lines, with a total cone angle between 1° and 45°, and preferably between 5° and 10°. Alternatively, the aforesaid tapered conformation may be for example slightly convex, with curved generating lines arched towards the outside or be saddle-shaped, with curved generating lines arched towards the inside.

According to another possible aspect of the invention, the trilobate profile of the male and female coupling zones is configured in order to make the coupling only by the three lobes, that are the three rounded vertices of the profile. This may be obtained for example by concaving the sides of the trilateral profile of the male coupling zone, by concaving the sides of the trilateral profile of the female coupling zone, or by concaving both of the aforesaid coupling zones.

According to an alternative aspect, the trilobate profile of the male and female coupling zones is configured in order to make the coupling only by the three sides, and not by the three lobes or vertices of the profile.

Finally, it is also possible to configure the trilobate profile of the male and female coupling zones to make the coupling on both the sides and the lobes.

A particularly advantageous application of the invention is the one relating to the coupling of a bicycle pedal crank to the bottom bracket spindle. Nonetheless, it is evident that the invention is applicable in general to the coupling of any bicycle component.

In the case of application to the spindle-pedal crank coupling, a further preferred aspect of the invention lies in the fact that the aforesaid trilateral profile has a vertex substantially positioned on the median axis of the pedal crank. Preferably, moreover, the trilateral profile has an axis of symmetry (meaning that the profile is substantially isosceles or substantially equilateral triangle-shaped) which is aligned on the median axis of the pedal crank and intersects the axis of the spindle. Still preferably, the vertex of the trilateral profile positioned on the median axis of the pedal crank points in the direction of the nearest end of the pedal crank.

Again according to a further preferred aspect, the trilateral profile is at one end portion of the bottom bracket spindle and the coupling cavity of the pedal crank has an end wall and the trilateral profile is in a portion immediately adjacent to said end wall. Preferably, moreover, the end portion of the spindle has an end surface with a peripheral bevelling that can be used to promote easy assembly of the spindle inside the pedal crank cavity. Again preferably, in the assembled condition, the aforesaid end portion of the spindle is in contact with said end wall of the pedal crank.

In the preferred embodiment, the aforesaid end wall has an opening for the passage of a lock screw destined to engage a threaded hole formed axially in the spindle from its end surface. This guarantees axial locking of the pedal crank on the spindle.

According to a further preferred aspect, the aforesaid opening in the end wall of the pedal crank is composed of a threaded hole with a larger diameter than the aforesaid hole for engaging the lock screw, said threaded hole with a larger diameter formed in the pedal crank being destined to engage a screw extractor tool to press the surface of the spindle out of the cavity in the pedal crank when spindle and pedal crank require to be decoupled.

In the aforesaid preferred embodiment, spindle and pedal crank are produced with the same material, in order to avoid any risk of stress corrosion (battery effect) and relative micro-movements that could produce cracks caused by the use of different materials, such as aluminium and steel. The common material chosen for spindle and pedal crank is preferably selected among steel, aluminium or its alloys, or a fabric based on structural fibres incorporated in a matrix of plastic material, said fibres being selected among carbon fibres, glass fibres, aramide fibres, boron fibres, ceramic fibres or any combination of these.

According to another aspect, the invention also relates both to a bicycle pedal crank on its own and to a bottom bracket spindle of a bicycle on its own, configured in such a way to realize, together with the respective part coupled to it, a coupling as defined above.

Further characteristics and advantages of the invention shall become clear from the description hereunder with reference to the accompanying drawings, provided purely as a non-limiting example, in which:
- Figure 1 is an exploded perspective view of a basic configuration or according to the invention, applicable to the coupling of any type of bicycle components,
- Figures 2, 3 are exploded perspective views of a bottom bracket spindle of a bicycle and a bicycle pedal crank, which may be coupled to each other by means of a preferred embodiment of the invention,
- Figure 4 is a enlarged scale sectional view of the coupling according to the invention as made in the spindle-pedal crank assembly in figures 2, 3,
- Figure 5 is an exploded partly sectional perspective view of the detail in figure 4,
- Figures 6, 7 are a front view and a rear view of a pedal crank according to the invention,
- Figure 8 is a sectional view according to the line VIII-VIII of figure 7,
- Figure 9 is an enlarged scale view of the detail IX of figure 6,
- Figures 10, 11 are variants, partly illustrated, of figures 6, 7,
- Figure 12 is a section, partly illustrated, according to the line XII-XII of figure 11,
- Figure 13 shows an enlarged scale of the detail XIII in figure 10,
- Figures 14-17 show a perspective view of the male coupling zone of a component according to the invention, respectively in the case of cylindrical (or with parallel generating lines), tapered with rectilinear (conic) profile, saddle-shaped and convex conformation,
- Figures 18-21 are variants of figures 14-17 which differ from these solely for the configuration of the trilateral profile of the section, which in this case has the sides arched towards the inside,
- Figures 22-25 are further variants of figures 14-17 which differ from these solely for the configuration of the trilateral profile, which in this case has the sides arched towards the outside.

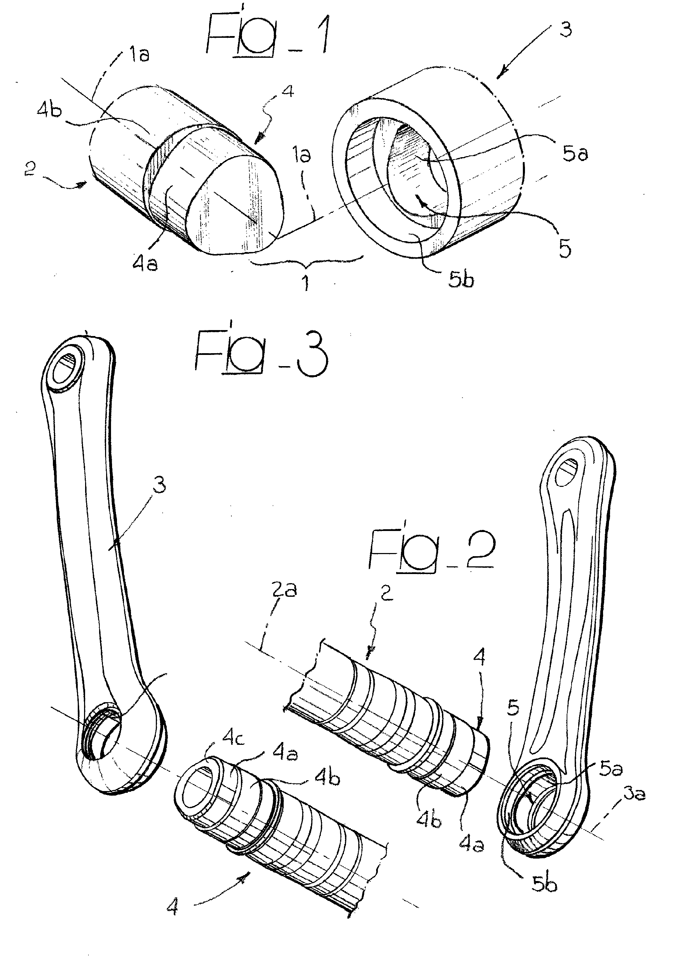

In figure 1, number 1 indicates as a whole a bicycle component coupling, achieved according to the invention. This solution is applicable to the coupling of any type of bicycle component, and therefore not only to the coupling of a bicycle pedal crank to the crank shaft spindle to be illustrated in greater detail hereunder. For example, the invention is applicable to the connection between a bicycle pedal crank and the pedal spindle associated with it, or between the saddle tube of the bicycle and the relative tube of the bicycle frame, or between the bicycle front fork tube and the handlebar, or yet again to the connection between the meshing sprockets of the bicycle chain which are associated with the hub of the rear wheel with the freewheel body on which they are assembled, etc..
According to the most general configuration illustrated in figure 1, the coupling 1 comprises a first coupling component 2 and a second coupling component 3 respectively with a male coupling zone, or male element, 4 and a female coupling zone, or cavity, 5. The coupling zones 4 and 5 present reciprocal engaging surfaces including first surface portions 4a, 5a which in a section perpendicular to the common coupling axis present a trilateral profile with rounded vertices, defined herein as trilobate profile. The lobes of the profile are formed by the rounded vertices. In the example shown in figure 1, the first surface portion 4a of the male element 4, the section of which presents the trilobate profile, forms an end portion of the male element. Provided adjacent to this is a second surface portion 4b with a cylindrical conformation, with a circular section. The second surface portion 4b of the male element 4 is destined to be received inside a corresponding second surface portion 5b of the coupling cavity 5, which presents a cylindrical conformation with a circular section. According to the invention, the surface portions 4a, 5a and 4b, 5b are dimensioned in order to couple with interference. The function of the cylindrical coupling of the two second surface portions 4b, 5b is to guarantee the relative correct positioning of the two elements 1, 2, especially with reference to the risk of misalignments or even slight relative inclinations of the two main axes of the male element 4 and of the coupling cavity 5, which must be aligned along a common axis 1a in the coupled condition. Nonetheless, it is evident that the two second surface portions 4b, 5b may even be omitted, without however departing from the scope of the invention.

Figure 1 does not illustrate further locking means of the two elements 2, 3 in the coupled condition. Theoretically, assembly with interference could also be sufficient to prevent undesired axial withdrawal of the two components. In practice it is preferable for the coupling to also include means for axially locking the two components together. As shall be seen hereunder, the figures of the accompanying drawings referring to the embodiment of the invention applied to the spindle-pedal crank coupling show these locking means in the form of a screw that engages an axial threaded hole formed in the male element from its end surface and which has a head resting against a seat formed in the element with the coupling cavity. It is nonetheless evident that these locking means could be made in any different manner or could also be extraneous to the two components 2, 3 and be applied to two elements which are in their turn connected to the two components 2, 3.

Figures 2-8 illustrate a first embodiment of the invention with reference to coupling of a bicycle pedal crank to a bottom bracket spindle. The figures illustrate the component according to the invention with reference to only one end of the bottom bracket spindle and to the pedal crank the only one associated with it. Nonetheless, it is evident that the component according to the invention can be made at only one or also at both ends of the bottom bracket spindle.

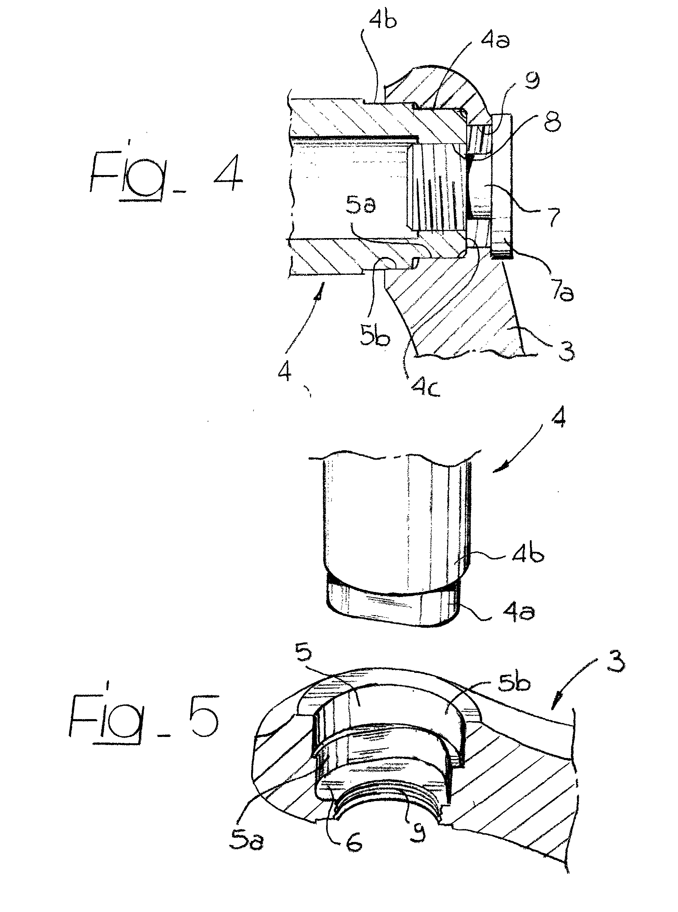

For analogy to the example illustrated in figure 1, the parts in figures 2-8 which correspond in their function to those in figure 1 are indicated with the same reference number. Therefore, in figures 2, 3 the reference number 2 indicates the bottom bracket spindle of the bicycle, as a whole, while reference number 3 indicates a bicycle pedal crank destined to be connected to one end of the spindle 2, also considered as a whole. At one end, the pedal crank 3 presents a cavity 5 defining the female element of the coupling that couples with the end portion 4 of the spindle 2, defining the male element of the coupling. The end portion 4 presents a coupling surface including a portion 4a with trilobate profile, and an adjacent portion 5b with circular profile. Correspondingly, the coupling cavity 5 of the pedal crank presents a portion 5a with trilobate profile and an adjacent portion 5b with circular profile which receive with interference the portions 4a, 4b of the spindle 4. The conformation of the cavity is better seen in the perspective sectional view in figure 5. As can be clearly seen in this figure, the coupling cavity 5 terminates in an end wall 6 which acts as stop for the end surface of the spindle 4 in the coupling condition, as is evident from the sectional view illustrated in figure 4. Axial locking of the coupling is obtained by means of a screw 7 with a threaded shank that engages a threaded axial hole 8 formed in the spindle 4 from its end surface 4c. The screw 7 has a head 7a that rests above a surface of the pedal crank 3 in order to hold the two elements 3, 4 in the coupled condition. The end wall 6 of the coupling cavity 5 in the pedal crank 3 (figure 5) presents an opening for the screw 7 to pass through, defined by a threaded circular hole 9, with a larger diameter than the hole 8 formed in the spindle 4 to receive the screw 7 and which is destined to be engaged by a screw extractor tool, in order to press against the end surface 4c of the spindle 4 and to make the spindle 4 exit from the coupling cavity 5 when the elements 3, 4 require to be decoupled from one another, after having removed the lock screw 7.

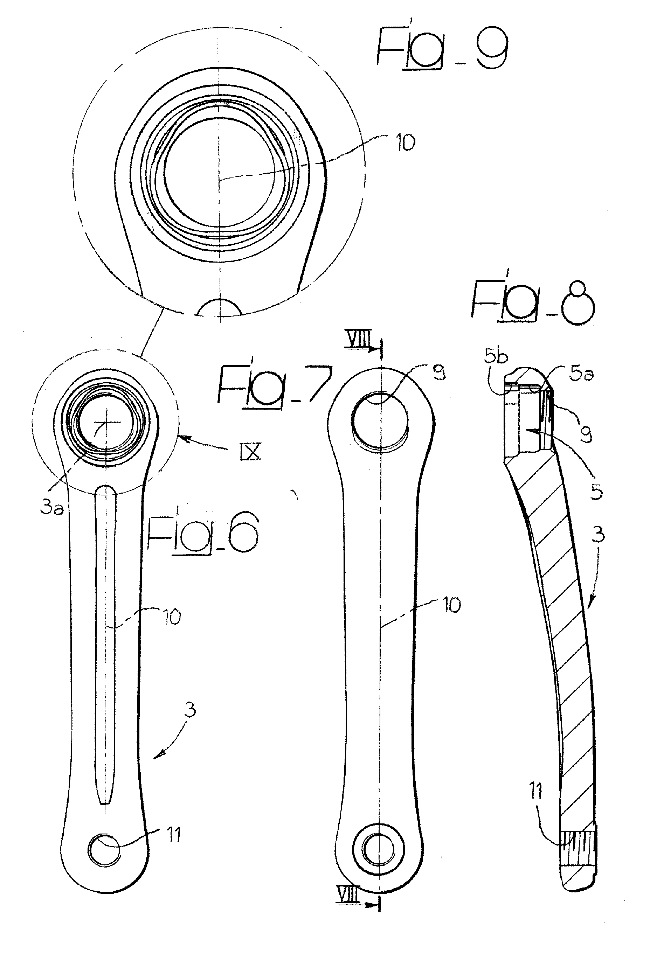

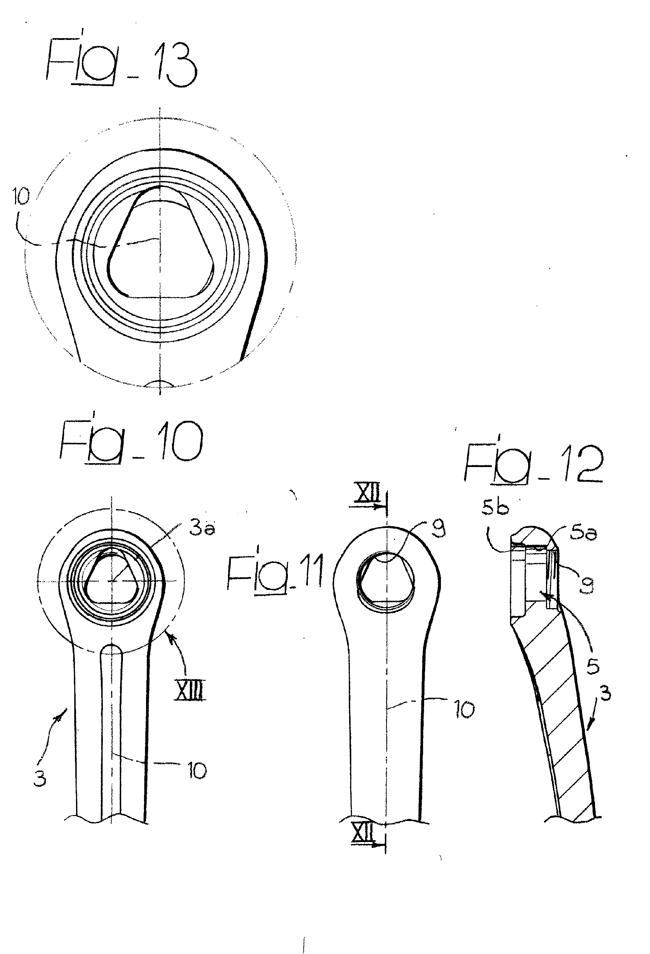

In figures 2 and 3, the end of the spindle 4 opposite to the one with the trilobate profile has been removed. It is possible for this end to have a conformation identical to the one described above, in order to make an identical coupling of the spindle 4 also with the other bicycle pedal crank, although it is also possible for this to be a traditionally shaped end. Figures 6-9 illustrate a front and sectional view of the conformation of the pedal crank described above, with particular attention to the coupling cavity 5. In the example illustrated in these figures, the three sides of the triangular profile with rounded vertices, or trilobate profile, are substantially rectilinear and equal to one another, substantially analogous to an equilateral triangle. The variant illustrated in figures 10-13 differs from the one above, mainly in that the trilobate profile is substantially similar to an isosceles triangle. In any case, the triangle presents a vertex aligned on the median axis 10 of the pedal crank 3 (see figures 6, 9, 10 and 13) with this vertex pointing in the direction of the end nearest to the pedal crank. In both cases, moreover, the theoretic triangle that produces the trilobate profile has an axis of symmetry coinciding with the median axis 10 of the pedal crank. This characteristic is important in order to guarantee efficient transmission of torsional stress in relation to the axis of the spindle 4 between spindle and pedal crank.

During use, the trilobate profile coupling surfaces guarantee transmission of torsional stresses, while coupling of the cylindrical surfaces 4b, 5b guarantees correct relative positioning of the two elements, especially with reference to possible misalignments of the axis 2a of the spindle 2 with the axis 3a of the coupling cavity 5 of the pedal crank 3. At the other end, the pedal crank 3 presents a threaded through hole 11 for connection to the spindle of the relative bicycle pedal, according to traditional technique. Of course, nothing prevents that the connection to the spindle of the pedal, at the end of the hole 11, be made according to the technique described above, using a trilobate coupling profile.

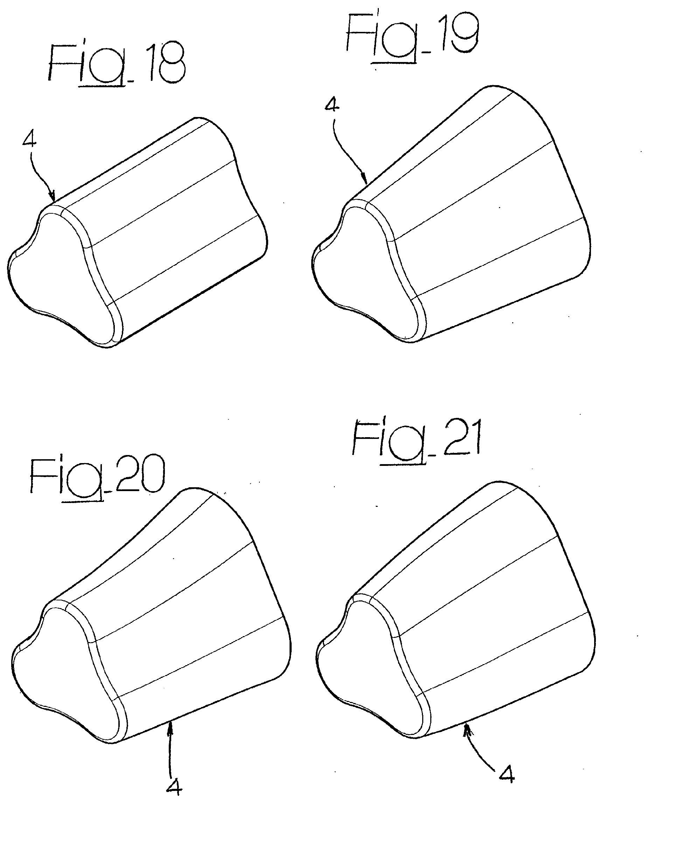

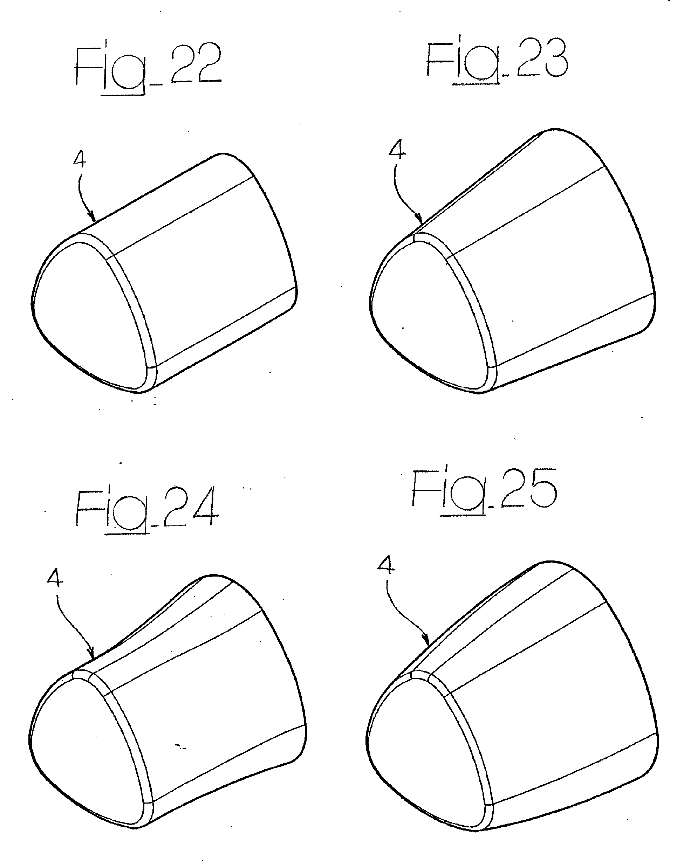

As already amply described, different variants to the trilateral shaped coupling profile are possible. For example, one or more sides of the triangle may not be rectilinear, but curved at least partly, and arched towards the centre or towards the outside of the triangle. In particular, it is possible for the coupling surfaces of the male element and the coupling cavity to be in contact only by the three lobes or vertices of the profile, which have a predominant function in the transmission of torsional stress. For example, it is possible to give a concave conformation to the sides of the trilobate profile of the spindle, or to those of the coupling cavity, or both to the former and to the latter (see figures 18-21). Or yet again, it is possible to make a trilobate profile with sides arched towards the outside (see figures 22-25) so that coupling by rotation is achieved only by these sides. Finally, it is of course possible to make a profile in which coupling is obtained both on the lobes, and on the sides. It is also possible for the surface portions with trilobate profile to have a tapered conformation, rather than a conformation with an axially uniform section like the one illustrated.

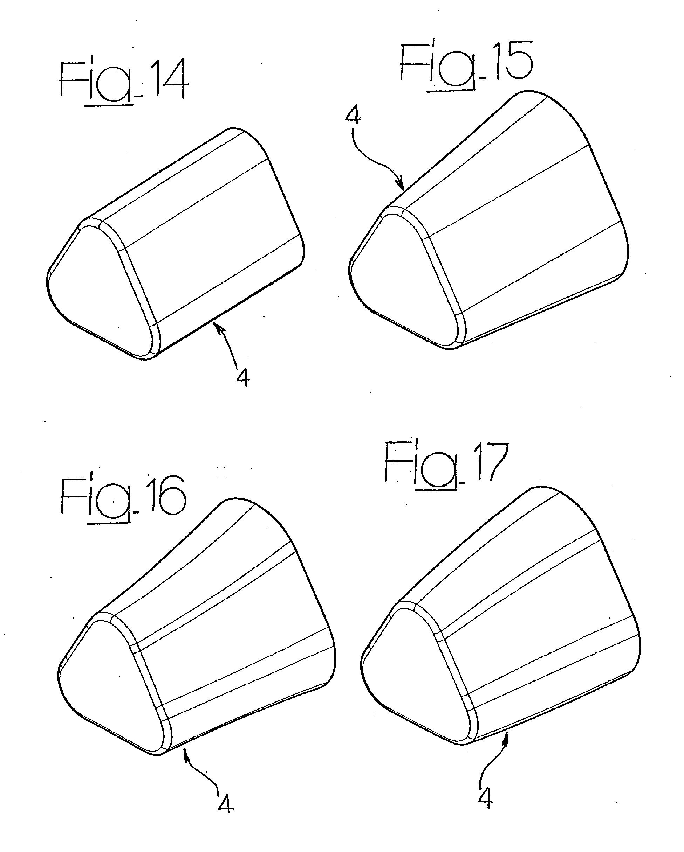

With a view to this, figures 14-17 compare various possible configurations of the male element 4. While figure 14 shows an element with a cylindrical conformation (in the sense that it presents parallel straight generating lines) and therefore it has an axially uniform section, figures 15-17 show tapered conformations. In particular, fig. 15 relates to the case of a conic conformation with rectilinear generating lines, with total cone angle between 1° and 45°, preferably between 5° and 10°. Figure 16 shows a saddle-shaped tapered configuration, with generating profile arched towards the inside. Finally, fig. 17 shows a slightly convex tapered configuration, with generating profile arched towards the outside. Of course, in each of the aforesaid cases, the female coupling zone has a complementary configuration.

The advantage of the tapered configuration is that it always guarantees easy and correct coupling at assembly, without the need for costly precision machining. Moreover, the coupling may generate Morse effect taper driving that further guarantees the stability of the connection.

Figures 18-21 are variants of figures 14-17 which differ from the former solely in the conformation of the trilateral profile of the section. In this case the three sides of the profile are arched towards the inside in order to generate a profile with three radial petals.

Finally, the aforesaid figures 22-25 show the variants in the case of profile with sides arched towards the outside.

It is in any case evident that different further variants of the conformation of the trilateral profile are possible.

As already mentioned above, one solution of the present invention is to achieve a coupling in which the coupling surfaces have a profile defining a plurality of coupling lobes spaced angularly from one another around a coupling axis. The lobes illustrated are three, although the number of lobes may be different, for example four, five, etc...

Of course, moreover, without prejudice to the principle of the invention, the constructional details and embodiments may vary widely in relation to what is described and illustrated herein purely as an example, without however departing from the scope of the present invention as defined in the accompanying claims.

For example, the male coupling zone may be associated with a pedal crank and the female coupling zone with a bottom bracket spindle.

## Claims

1. Bicycle component (2) with at least one male coupling zone (4) suitable to be coupled to a corresponding female coupling zone (5) of a second bicycle component (3), the two coupling zones, male (4) and female (5), presenting respective reciprocal engaging surfaces (4a, 5a), **characterized in that** said male coupling zone (4) presents a section with a trilateral profile.

2. Bicycle component (3) with at least one female coupling zone (5) suitable to be coupled to a corresponding male coupling zone (4) of a second bicycle component (2), the two coupling zones, female (5) and male (4), presenting respective reciprocal engaging surfaces (5a, 4a), **characterized in that** said female coupling zone (5) presents a section with a trilateral profile.

3. Component according to claim 1 or 2, **characterized in that** said profile has one or more rectilinear sides.

4. Component according to claim 1 or 2, **characterized in that** said profile has one or more at least partly curved sides.

5. Component according to claim 4, **characterized in that** said one or more of the at least partly curved sides are arched towards the centre of the profile.

6. Component according to claim 4, **characterized in that** one or more of the at least partly curved sides are arched towards the outside of the profile.

7. Component according to claim 1 or 2, **characterized in that** said profile has sides of different types chosen among rectilinear, curved and arched towards the inside of the profile and curved and arched towards the outside of the profile, according to any combination.

8. Component according to claim 1 or 2, **characterized in that** the profile is substantially equilateral.

9. Component according to claim 1 or 2, **characterized in that** the profile is substantially isosceles.

10. Component according to claim 1 or 2, **characterized in that** the profile is irregular, or each of the three sides differ from one another.

11. Component according to any one of the previous claims, **characterized in that** the profile has one or more rounded vertices.

12. Component according to claim 11, **characterized in that** all three vertices of the profile are rounded.

13. Component according to claim 12, **characterized in that** the profile is of the trilobate type.

14. Component according to claim 12, **characterized in that** the three sides of the profile with rounded vertices are arched towards the inside of the profile in order to define a figure with three radial petals, angularly spaced apart.

15. Component according to claim 1 or 2, **characterized in that** the engaging surface of the coupling zone is axially tapered.

16. Component according to claim 1 or 2, **characterized in that** said coupling zone with a trilateral profile has substantially constant axial section.

17. Component according to claim 15, **characterized in that** said axially tapered coupling zone has a total cone angle between 1° and 45°.

18. Component according to claim 17, **characterized in that** said axially tapered coupling zone has a total cone angle between 5° and 10°.

19. Component according to claim 15, **characterized in that** said axially tapered coupling zone has a conic conformation with rectilinear generating lines.

20. Component according to claim 15, **characterized in that** said axially tapered coupling zone has slightly convex conformation, with curved generating lines arched towards the outside.

21. Component according to claim 15, **characterized in that** said axially tapered coupling zone has a saddle-shaped conformation, with curved generating lines arched towards the inside.

22. Component according to claim 1 or any of the claims from 3 to 21, **characterized in that** it is a spindle (2) for a bottom bracket of a bicycle and **in that** said male coupling zone (4) is one end of it.

23. Spindle according to claim 22, **characterized in that** also its second end presents said male coupling zone (4) with trilateral profile.

24. Spindle according to claim 22, **characterized in that** the end part of said end with trilateral profile is bevelled.

25. Spindle according to claim 22, **characterized in that** said end with trilateral profile extends from the central body of the spindle and has a section that is contained inside the section of said central body.

26. Spindle according to claim 22, **characterized in that** at its two ends it presents threaded axial holes (8) to engage the fixing screws (7), and that said holes have threads with equivalent directions.

27. Spindle according to claim 22, **characterized in that** at its two ends it presents threaded axial holes (8) to engage the fixing screws (7), and that said holes have threads with opposite directions.

28. Component according to any one of the claims from 2 to 21, **characterized in that** it is a bicycle pedal crank (3) and **in that** said female coupling zone (5) with trilateral profile is formed in one of its ends.

29. Pedal crank according to claim 28, **characterized in that** the trilateral profile has a vertex substantially positioned on the median axis of the pedal crank (3).

30. Pedal crank according to claim 28, **characterized in that** the trilateral profile has an axis of symmetry that is aligned on the median axis of the pedal crank (3).

31. Pedal crank according to claim 29, **characterized in that** the vertex on the median axis of the pedal crank points in the direction of the nearest end of the pedal crank (3).

32. Pedal crank according to claim 28, **characterized in that** also the other end of the pedal crank (3) presents a female coupling zone (5) with a trilateral profile.

33. Pedal crank according to claim 28, **characterized in that** it presents an end wall (6) and **in that** the coupling zone (5a) with trilateral profile is immediately adjacent to said end wall (6).

34. Pedal crank according to claim 33, **characterized in that** in the part opposite to said end wall (6) it presents a zone (5b) with a substantially circular section destined to couple with the body of a spindle (2).

35. Pedal crank according to claim 33, **characterized in that** said end wall (6) presents a peripheral bevelling.

36. Pedal crank according to claim 33, **characterized in that** said end wall (6) has an opening (9) for passage of a lock screw (7), destined to engage a threaded hole (8) formed axially in a spindle (2) from its end surface.

37. Pedal crank according to claim 36, **characterized in that** said opening is formed of a threaded hole (9) with a larger diameter than the aforesaid hole (8) for engaging the fixing screw (7), said threaded hole with a larger diameter (9) formed in the pedal crank (2) being destined to be engaged by a screw extractor tool to press the end surface of the spindle (2) out of the cavity (5) in the pedal crank when the spindle (2) and pedal crank (3) are required to be decoupled.

38. Coupling between a first bicycle component (2) with at least one male coupling zone (4) and a second bicycle component (3) with at least one female coupling zone (5), the two coupling zones, male (4) and female (5), presenting respective reciprocal engaging surfaces (4a, 5a), **characterized in that** said coupling zones (4, 5) present a section with trilateral profile.

39. Coupling according to claim 38, **characterized in that** the aforesaid engaging surfaces (4a, 5a) are dimensioned in order to couple with interference.

40. Coupling according to claim 38, **characterized in that** the aforesaid engaging surfaces have first engaging portions (4a, 5a) with the aforesaid trilateral profile and second engaging portions (4b, 5b), in a position axially moved in relation to the first portions, with a substantially circular profile.

41. Coupling according to claim 40, **characterized in that** the aforesaid second portions (4b, 4b) of the engaging surfaces are dimensioned in order to couple with interference.

42. Coupling according to claim 38, **characterized in that** the profile is of the trilobate type.

43. Coupling according to claim 42, **characterized in that** the trilobate profile of the male coupling zone (4) and the trilobate profile of the female coupling zone (5) are configured in order to achieve the coupling only by the three lobes.

44. Coupling according to claim 43, **characterized in that** the trilobate profile of the male coupling zone (4) has the sides slightly concave or rectilinear while the trilobate profile of the female coupling zone (5) has rectilinear or slightly convex sides.

45. Coupling according to claim 42, **characterized in that** the trilobate profile of the male coupling zone (4) and the trilobate profile of the female coupling zone (5) are configured in order to achieve the coupling only by the three sides.

46. Coupling according to claim 45, **characterized in that** the trilobate profile of the male coupling zone (4) and the trilobate profile of the female coupling zone (5) have the sides arched towards the outside or rectilinear.

47. Coupling according to claim 42, **characterized in that** the trilobate profile of the male coupling zone (4) and the trilobate profile of the female coupling zone (5) are configured in order to achieve the coupling both by the three lobes and by the three sides.

48. Coupling according to claim 38, **characterized in that** the two coupling components are made of the same material.

49. Coupling according to claim 48, **characterized in that** said material is selected among aluminium, aluminium alloys, steel, fabric based on structural fibres incorporated in a matrix of plastic material, said fibres being selected among carbon fibres, glass fibres, aramide fibres, boron fibres, ceramic fibres or any combination of these.

50. Coupling according to claim 38, **characterized in that** the reciprocal engaging surfaces present end portions (4c, 6) which, when completely coupled, come into contact with one another.

51. Coupling according to any one of the claims from 38 to 50, **characterized in that** the first component is a bottom bracket spindle (2) of a bicycle and the second component is a bicycle pedal crank (3).

52. Bottom bracket of a bicycle comprising a spindle according to any one of the claims from 22 to 27.

53. Component according to claim 1 or in any one of the claims from 3 to 21, **characterized in that** it is a bicycle saddle-pillar and **in that** said male coupling zone is one of its ends.

54. Component according to claim 1 or in any one of the claims from 3 to 21, **characterized in that** it is a bicycle pedal spindle and **in that** said male coupling zone is one of its ends.

55. Component according to claim 1 or any one of the claims from 3 to 21, **characterized in that** it is a freewheel body for a bicycle hub and **in that** said male coupling zone is formed of at least one portion of said body.

56. Component according to any one of the claims from 1 to 21, **characterized in that** it is a bicycle spoke and **in that** said male coupling zone is one of its ends.

57. Component according to any one of the claims from 2 to 21, **characterized in that** it is a bicycle saddle and **in that** said female coupling zone with trilateral profile is formed in one of its ends.

58. Component according to any one of the claims from 2 to 21, **characterized in that** it is a bicycle rim and **in that** said female coupling zone with trilateral profile is formed along its circumference.

59. Component according to any one of the claims from 2 to 21, **characterized in that** it is a bicycle hub and **in that** along its circumference it presents at least one female coupling zone with trilateral profile.

60. Component according to any one of the claims from 2 to 21, **characterized in that** it is a bicycle sprocket and **in that** said female coupling zone with trilateral profile is formed in a central zone of it.

61. Bicycle component (2) with at least one male coupling zone (4) suitable to be coupled to a corresponding female coupling zone (5) of a second bicycle component (3), the two coupling zones, male (4) and female (5), presenting respective reciprocal engaging surfaces (4a, 5a), **characterized in that** said male coupling zone (4) presents a section with a profile defining a plurality of lobes angularly spaced around an axis.

62. Bicycle component (3) with at least one female coupling zone (5) suitable to be coupled to a corresponding male coupling zone (4) of a second bicycle component (2), the two coupling zones, male (4) and female (5), presenting respective reciprocal engaging surfaces (5a, 4a), **characterized in that** said female coupling zone (5) presents a section with a profile defining a plurality of lobes angularly spaced around an axis.

63. Bicycle component according to claims 61 and 62, **characterized in that** the number of lobes is three.

64. Coupling between a first bicycle component (2) with at least one male coupling zone (4) and a second component (3) with at least one female coupling zone (5), the two coupling zones, male (4) and female (5), presenting respective reciprocal engaging surfaces (4a, 5a), **characterized in that** said coupling zones (4, 5) present a section with a profile defining a plurality of lobes angularly spaced around an axis.

65. Bicycle coupling according to claim 64, **characterized in that** the number of lobes is three.
